# EUROPEAN PATENT SPECIFICATION

(11) **EP 3 296 557 B1**
(45) Date of publication and mention of the grant of the patent: **25.11.2020**
(21) Application number: 16792724.3
(22) Date of filing: 11.05.2016
(51) Int. Cl.: F02M 47/04, F02M 37/00, F02M 43/00, F02M 63/00, F02B 25/04, F02M 21/02, F16K 31/122

(54) **FUEL INJECTION DEVICE AND ENGINE**
BRENNSTOFFEINSPRITZVORRICHTUNG UND MOTOR
DISPOSITIF D'INJECTION DE CARBURANT ET MOTEUR

(30) Priority: 11.05.2015 JP 2015096718
(43) Date of publication of application: 21.03.2018
(73) Proprietor: IHI Corporation, Tokyo 135-8710 (JP)
(72) Inventor: YAMADA Takeshi, Tokyo 135-8710 (JP); UMEMOTO Yoshiyuki, Aioi-shi Hyogo 678-0041 (JP); HIROSE Takayuki, Aioi-shi Hyogo 678-0041 (JP); TERAMOTO Jun, Aioi-shi Hyogo 678-0041 (JP)
(74) Representative: TBK
(86) International application number: PCT/JP2016/064043
(87) International publication number: WO 2016/181999

(56) References cited:
- WO-A1-2014/054732
- AT-U1- 2 854
- DE-A1-102012 204 248
- JP-A- H0 466 768
- JP-A- H08 246 980
- JP-A- H08 246 980
- JP-A- H09 317 593
- JP-A- S59 183 066
- JP-A- S59 183 066
- JP-A- 2000 240 534
- JP-A- 2000 249 016
- JP-U- H03 129 767
- JP-U- S55 125 968

## Description

### [Technical Field]

The present disclosure relates to a hydraulically driven fuel injection device having an operating piston operated by a hydraulic pressure, and an engine.

Priority is claimed on Japanese Patent Application No. 2015-96718, filed May 11, 2015, the content of which is incorporated herein by reference.

### [Background Art]

A fuel injection device for supplying fuel to a combustion chamber is provided in an engine. For example, as described in Patent Document 1, in the hydraulically driven fuel injection device, a hydraulic pressure of a hydraulic oil acts on the hydraulic chamber, and thus a piston is pressed. A fuel injection valve is opened and closed by displacement of the piston, and thus supply or stop of the fuel is controlled. A high pressure fuel pump with a control valve is known from Patent Document 2.

### [Citation List]

### [Patent Document]

[Patent Document 1]
   Japanese Unexamined Patent Application, First Publication No. 2001-527614
[Patent Document 2]
   DE 10 2012 204 248 A1

### [Summary of Invention]

### [Technical Problem]

However, in the hydraulically driven fuel injection device, since the hydraulic chamber is fully filled with the hydraulic oil and the hydraulic oil does not flow much when only the fuel injection valve is opened and closed, a temperature of the hydraulic oil in the hydraulic chamber or an oil passage near the hydraulic chamber is increased or conversely reduced as time elapses. As a result, the viscosity of the hydraulic oil is changed, and a deviation in timing and duration of the opening and closing of the fuel injection valve is generated, and thus the operation accuracy thereof may be reduced.

The present disclosure is made in view of such problems, and an object of the present disclosure is to provide a hydraulically driven fuel injection device in which operation accuracy of a fuel injection valve is enhanced by suppressing a temperature change in a hydraulic oil, and an engine.

### [Solution to Problem]

In order to achieve the aforementioned objects, the invention provides a fuel injection device having a fuel injection valve which is changed between a closed state in which supply of a fuel is stopped and an open state in which the fuel is supplied. The fuel injection device includes a hydraulic pump configured to discharge a hydraulic oil, a casing in which a hydraulic chamber connected to the hydraulic pump is provided, an operating piston slidably provided inside the casing such that, when a pressure in the hydraulic chamber is less than a preset threshold value, the operating piston is held in a standby position in which the fuel injection valve is maintained in the closed state, and when the pressure in the hydraulic chamber is more than or equal to the threshold value, the operating piston moves to an operating position in which the fuel injection valve is set to the open state, and a bypass hole formed in the operating piston and configured to guide the hydraulic oil discharged from the hydraulic pump into the hydraulic chamber, while the operating piston is held in the standby position. The operating piston has a pressure receiving surface which faces the hydraulic chamber, a first end of the bypass hole is opened to the pressure receiving surface, and a second end of the bypass hole is opened to a sliding surface.

Also, an engine of the present disclosure includes the fuel injection device.

### [Advantageous Effects of Invention]

According to the present disclosure, it is possible to enhance operation accuracy of a fuel injection valve by suppressing a temperature change of a hydraulic oil.

### [Brief Description of Drawings]

FIG. 1 is a view showing an entire constitution of a uniflow scavenging two-cycle engine.
FIG. 2 is a view showing a fuel injection port
FIG. 3A is a view showing a fuel injection device.
FIG. 3B is a view showing the fuel injection device.
FIG. 4 is a view showing the fuel injection device and a flow of a hydraulic oil.
FIG. 5 is a view showing the fuel injection device and the flow of the hydraulic oil.

### [Description of Embodiments]

Hereinafter, preferred embodiments of the present disclosure will be described in detail with reference to the accompanying drawings. Dimensions, materials, other specific numerical values, and so on indicated in these embodiments are merely examples for facilitating comprehension of the disclosure, and unless indicated otherwise, the present disclosure is not limited thereto. Note that in the specification and drawings, elements having substantially the same functions and constitutions will be given the same reference numerals, and a duplicate description thereof will be omitted. Further, elements not directly related to the present disclosure are not shown in the drawings.

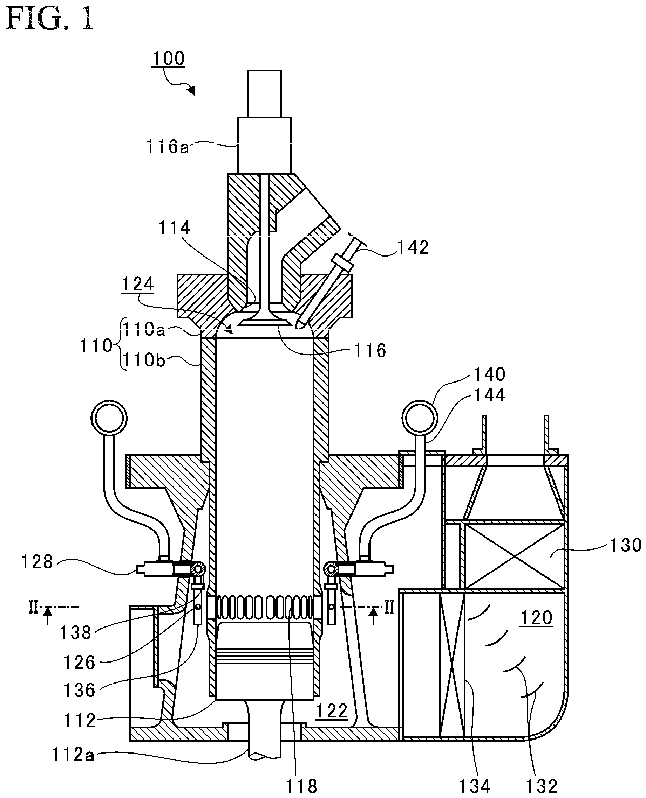

FIG. 1 is a view showing an entire constitution of a uniflow scavenging two-cycle engine 100. The uniflow scavenging two-cycle engine 100 of the embodiment is used in, for example, a ship. Specifically, the uniflow scavenging two-cycle engine 100 includes a cylinder 110, a piston 112, an exhaust port 114, an exhaust valve 116, a scavenging port 118, a scavenging reservoir 120, a scavenging chamber 122, a combustion chamber 124, a fuel injection port 126, a fuel injection device 128, a cooler 130, a guide vane 132, a drain separator 134, a fuel pipe 136, an annular pipe 138, a fuel gas main pipe 140, a pilot injection valve 142 and a fuel supply passage 144.

In the uniflow scavenging two-cycle engine 100, exhaust, intake, compression, combustion and expansion are performed between two strokes, an up-stroke and a down-stroke, of the piston 112, and the piston 112 is slid in the cylinder 110. A first end of a piston rod 112a is fixed to the piston 112. Also, a crosshead which is not shown is connected to a second end of the piston rod 112a, and the crosshead reciprocates together with the piston 112. When the crosshead reciprocates according to reciprocating movement of the piston 112, a crankshaft which is not shown is rotated in conjunction with the reciprocating movement thereof.

The exhaust port 114 is an opening provided at a cylinder head 110a located above a top dead center of the piston 112 and is opened and closed to exhaust an exhaust gas generated in the cylinder 110 after combustion. The exhaust valve 116 is moved up and down at a predetermined timing by an exhaust valve drive unit 116a to open and close the exhaust port 114. When the exhaust port 114 is opened, the exhaust gas is exhausted from the cylinder 110 through the exhaust port 114.

The scavenging port 118 is a hole which passes through from an inner circumferential surface (an inner circumferential surface of a cylinder liner 110b) on a lower end side of the cylinder 110 to an outer circumferential surface thereof, and a plurality of scavenging ports 118 are provided all around the cylinder 110. Additionally, the scavenging port 118 sucks an active gas into the cylinder 110 according to a sliding motion of the piston 112. The active gas includes an oxidizer such as oxygen, ozone or the like, or a mixture thereof (e.g., air).

The active gas (e.g., air) compressed by a blower which is not shown is cooled by the cooler 130 and sealed in the scavenging reservoir 120. The compressed and cooled active gas is distributed by the guide vane 132 disposed in the scavenging reservoir 120, and then moisture is removed by the drain separator 134.

The scavenging chamber 122 is in communication with the scavenging reservoir 120 and also surrounds a second end side (a lower side in FIG. 1) of the cylinder 110 in a stroke direction of the piston 112, and the compressed, cooled and dehydrated active gas is introduced therein.

The scavenging port 118 is provided at a portion of the cylinder 110 (the cylinder liner 110b) which is located inside the scavenging chamber 122 and sucks the active gas from the scavenging chamber 122 into the cylinder 110 due to a differential pressure between the scavenging chamber 122 and the cylinder 110 according to the sliding motion of the piston 112. The active gas sucked into the cylinder 110 is guided to the combustion chamber 124 by the piston 112.

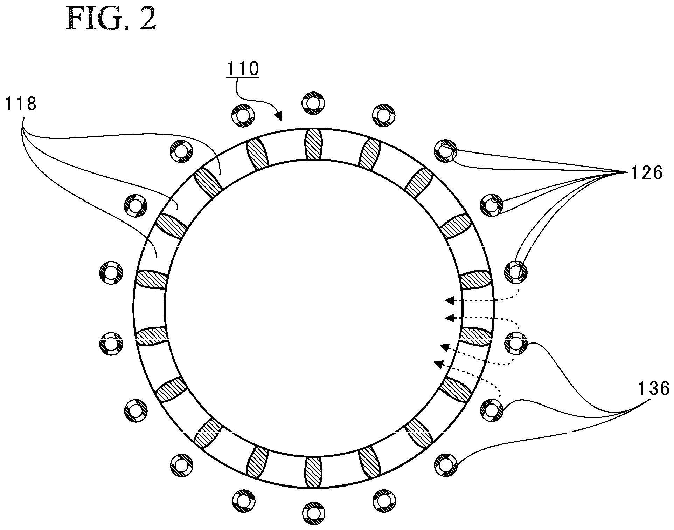

FIG. 2 is a view showing the fuel injection port 126 and shows a cross-sectional view taken along line II-II of FIG. 1. As shown in FIG. 2, the fuel injection port 126 is provided radially outside the cylinder 110 with respect to the scavenging port 118. Specifically, the fuel injection port 126 is provided to face an outer surface of the cylinder 110 between the adjacent scavenging ports 118. Also, the fuel injection port 126 is located within a range of the scavenging port 118 in the stroke direction of the piston 112.

In the embodiment, since the plurality of scavenging ports 118 are provided all around the uniflow scavenging two-cycle engine 100, a plurality of fuel injection ports 126 are also provided in a circumferential direction of the cylinder 110 in accordance with the scavenging ports 118. Specifically, one fuel pipe 136 through which a fuel gas is guided to each of the scavenging ports 118 extends in the stroke direction of the piston 112. Further, the fuel pipe 136 is disposed radially outside the outer surface of the cylinder 110 between the adjacent scavenging ports 118, and a flow of the active gas is hardly obstructed by the fuel pipe 136. Also, the fuel injection port 126 is an opening formed on an adjacent fuel pipe 136 side of the fuel pipes 136.

The annular pipe 138 is disposed on an exhaust port 114 side (an upper side of FIG. 1) of the fuel pipe 136. The annular pipe 138 is a pipe which annularly surrounds a radial outside of the cylinder 110 in a circumferential direction of the cylinder 110 and is in communication with the fuel pipe 136. The fuel gas is guided from the fuel gas main pipe 140, in which the fuel gas is stored, to the annular pipe 138.

The fuel injection port 126 injects the fuel gas, which is supplied from the fuel gas main pipe 140 through the annular pipe 138, to the active gas sucked into the scavenging port 118. As a result, the fuel gas is added to the flow of the active gas, as indicated by an arrow of a broken line in FIG. 2, sucked from the scavenging port 118 into the cylinder 110 together with the active gas and then guided to the combustion chamber 124.

The example of FIG. 2 has described the case in which the fuel injection port 126 is opened toward the adjacent fuel pipe 136. However, the fuel injection port 126 is preferably formed so that the injected fuel gas is sucked into the scavenging port 118 together with the active gas. For example, the fuel injection port 126 may be opened toward the scavenging port 118 and may be provided at any place.

Further, the example of FIG. 2 has described the case in which the fuel pipes 136 and the scavenging ports 118 are disposed in the same number. However, the number of fuel pipes 136 that are arranged may be different from that of the scavenging ports 118. For example, one fuel pipe 136 may be provided at every two scavenging ports 118.

Further, as shown in FIG. 1, the pilot injection valve 142 is provided at the cylinder head 110a. Additionally, an appropriate amount of fuel oil is injected from the pilot injection valve 142 at a predetermined point of time in an engine cycle. The fuel oil is vaporized by heat of the combustion chamber 124 which is formed inside the cylinder 110 to be surrounded by the cylinder head 110a, the cylinder liner 110b, and the piston 112. Additionally, the fuel oil is vaporized, spontaneously ignited, and burned in a short time, and thus a temperature of the combustion chamber 124 is increased extremely. As a result, the fuel gas guided into the combustion chamber 124 can be reliably burned at a predetermined timing. The piston 112 reciprocates mainly due to an expansion pressure caused by the combustion of the fuel gas.

Here, the fuel gas is produced, for example, by gasifying liquefied natural gas (LNG). Also, the fuel gas is not limited to LNG, and, for example, liquefied petroleum gas (LPG), gas oil, heavy oil or the like may be gasified and applied as the fuel gas.

The fuel injection device 128 is provided on an upstream side of the fuel pipe 136 and the annular pipe 138 in the fuel supply passage 144 which communicates from the fuel gas main pipe 140 to the fuel injection port 126. Additionally, the fuel injection device 128 opens and closes the fuel supply passage 144 and controls injection of the fuel gas from the fuel injection port 126.

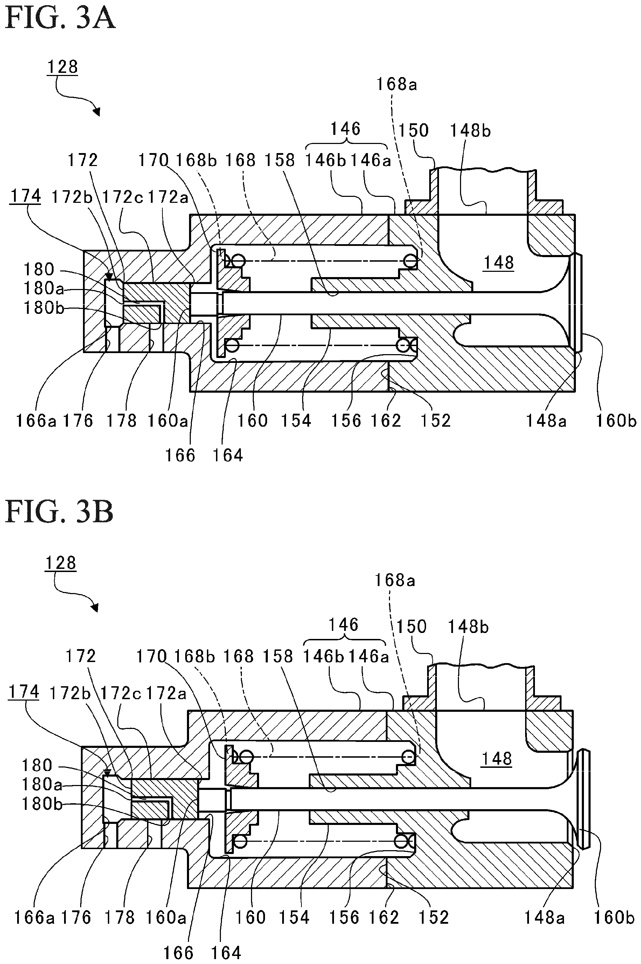

FIGS. 3A and 3B are views showing the fuel injection device 128 and show schematic cross-sectional views of the fuel injection device 128 disposed on a left side of the cylinder 110 in FIG. 1. The fuel injection device 128 disposed on a right side of the cylinder 110 in FIG. 1 has the same structure as that disposed on the left side, and thus a description thereof will be omitted.

As shown in FIGS. 3A and 3B, a casing 146 of the fuel injection device 128 is formed by two outer wall members 146a and 146b. The outer wall member 146a is located on a right side (the cylinder 110 side) in FIGS. 3A and 3B with respect to the outer wall member 146b, and a gas passage 148 through which the fuel gas flows is formed therein.

A first end 148a of the gas passage 148 which is opened toward a right side of FIGS. 3A and 3B is in communication with the annular pipe 138, and a second end 148b thereof which is opened toward an upper side in FIGS. 3A and 3B is in communication with the fuel gas main pipe 140 through a pipe connected to a flange member 150.

Also, in the outer wall member 146a, a protruding portion 154 is provided at a facing surface 152 which faces the outer wall member 146b. The protruding portion 154 protrudes from the facing surface 152 toward the outer wall member 146b. An annular groove 156 is formed at an outer circumference of a base side of the protruding portion 154.

Additionally, a through-hole 158 which passes through from an outer wall member 146b side to the gas passage 148 is formed in the protruding portion 154. A first end 160a of a fuel injection valve 160 is inserted into the through-hole 158 from a gas passage 148 side. A valve body 160b is formed at a second end side of the fuel injection valve 160. The first end 148a of the gas passage 148 is opened and closed by the valve body 160b. That is, the fuel injection valve 160 is shifted to a closed state (FIG. 3A) in which fuel supply is stopped and an open state (FIG. 3B) in which fuel is supplied.

In the outer wall member 146b, a facing hole 164 having the same inner diameter as the groove 156 on the outer wall member 146a side is provided at a facing surface 162 thereof which faces the outer wall member 146a. A small diameter hole 166 having a diameter smaller than that of the facing hole 164 is formed at a bottom surface of the facing hole 164. Additionally, an elastic spring 168 is disposed inside the facing hole 164, and a first end 168a thereof extends to the groove 156 and is fixed thereto. Further, a second end 168b of the elastic spring 168 is fixed to a valve spring retainer 170.

The first end 160a of the fuel injection valve 160 passes through the valve spring retainer 170 and protrudes from the valve spring retainer 170 to the inside of the small diameter hole 166. The valve spring retainer 170 is fixed to the fuel injection valve 160, and in FIG. 3A, the fuel injection valve 160 is biased toward a left side of the drawing by a biasing force of the elastic spring 168, and thus the valve body 160b closes the first end 148a of the gas passage 148.

As described above, the first end 160a of the fuel injection valve 160 is located inside the small diameter hole 166. Also, the first end 160a of the fuel injection valve 160 is in contact with an operating piston 172. The operating piston 172 is inserted into the small diameter hole 166 and also has a size at which it can slide in the small diameter hole 166 in a left and right direction of FIGS. 3A and 3B. Also, a first end 172a of the operating piston 172 is in contact with the first end 160a of the fuel injection valve 160, and a second end 172b thereof which is located on an opposite side faces a bottom surface 166a of the small diameter hole 166.

A hydraulic chamber 174 is formed to be surrounded by the small diameter hole 166 and the operating piston 172. That is, the second end 172b of the operating piston 172 serves as a pressure receiving surface facing the hydraulic chamber 174.

Also, an oil guide hole 176 which is in communication with the hydraulic chamber 174 is formed at the outer wall member 146b, and the hydraulic oil is introduced into the hydraulic chamber 174 through the oil guide hole 176. A hydraulic pressure in the hydraulic chamber 174 is boosted by the hydraulic oil introduced into the hydraulic chamber 174, and when a pressing force due to the hydraulic pressure is increased higher than the biasing force of the elastic spring 168, the fuel injection valve 160 is pressed to a right side of the drawing, as shown in FIG. 3B, and the first end 148a of the gas passage 148 is opened.

Conversely, when the hydraulic pressure in the hydraulic chamber 174 drops and the pressing force due to the hydraulic pressure becomes smaller than the biasing force of the elastic spring 168, the fuel injection valve 160 is pressed to a left side of the drawing, as shown in FIG. 3A, and the first end 148a of the gas passage 148 is closed.

That is, a threshold value of the hydraulic pressure in the hydraulic chamber 174 due to the biasing force of the elastic spring 168 is set, and when the pressure in the hydraulic chamber 174 is less than the threshold value, the operating piston 172 is held in a standby position in which the fuel injection valve 160 is maintained in the closed state (FIG. 3A). Additionally, when the pressure in the hydraulic chamber 174 is more than or equal to the threshold value, the operating piston 172 moves to an operating position in which the fuel injection valve 160 is maintained in the open state (FIG. 3B).

A discharge port 178 is a hole which passes through from the small diameter hole 166, in which the operating piston 172 is inserted, to the outside of the outer wall member 146b and discharges the hydraulic oil leaking from the hydraulic chamber 174 to the facing hole 164 side according to sliding of the operating piston 172 to the outside of the outer wall member 146b.

Furthermore, a bypass hole 180 is provided in the operating piston 172. A first end 180a of the bypass hole 180 is opened to the second end 172b (the pressure receiving surface) of the operating piston 172, and a second end 180b of the bypass hole 180 is opened to a sliding surface 172c which slides along an inner wall of the small diameter hole 166. Hereinafter, the bypass hole 180 and the flow of the hydraulic oil will be described in detail.

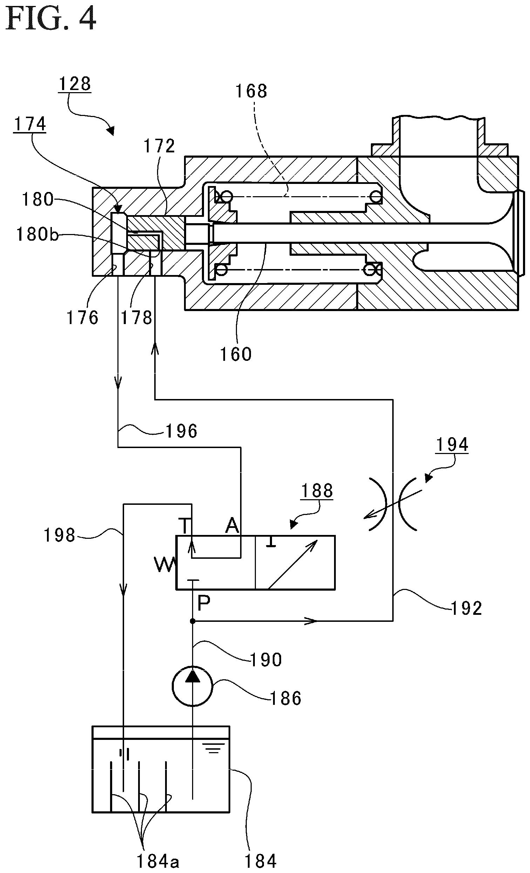

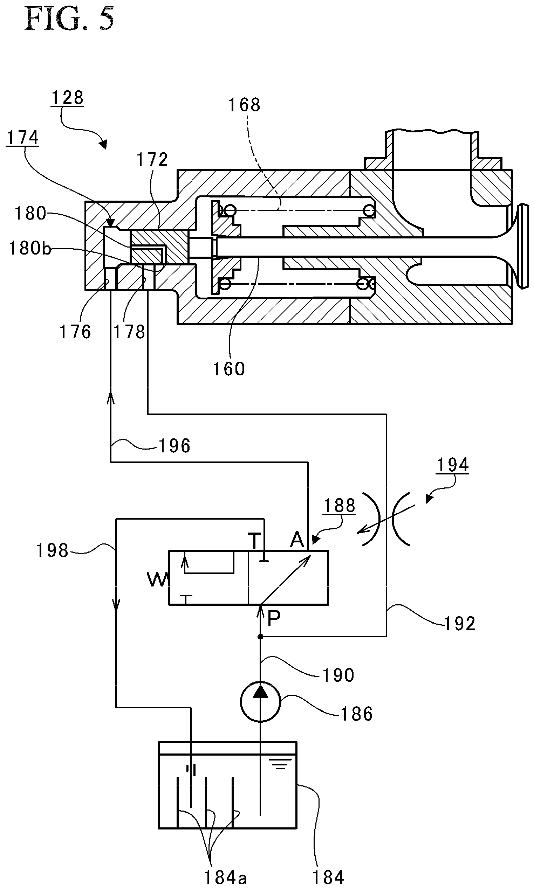

FIGS. 4 and 5 are views showing the fuel injection device 128 and the flow of the hydraulic oil. FIG. 4 shows a state in which the fuel injection valve 160 is closed, and FIG. 5 shows a state in which the fuel injection valve 160 is open.

As shown in FIGS. 4 and 5, a hydraulic pump 186 for discharging the hydraulic oil is connected to a hydraulic oil tank 184. Additionally, a first supply pipe 190 is connected to an outlet port of the hydraulic pump 186, and a P port of a switching valve 188 having two positions and three ports is connected to the first supply pipe 190. A circulation pipe 192 which extends to the discharge port 178 is branched from the first supply pipe 190, and a throttle valve 194 is provided at the circulation pipe 192.

Also, an A port of the switching valve 188 and the oil guide hole 176 are in communication with each other through a hydraulic oil inlet pipe 196, and a T port of the switching valve 188 and the hydraulic oil tank 184 are in communication with each other through a return pipe 198. A plurality of plate members 184a for removing bubbles are disposed in the hydraulic oil tank 184, and the hydraulic oil in the hydraulic oil tank 184 is warmed by a heater which is not shown.

When the switching valve 188 is located at a switching position shown in FIG. 4, the P port of the switching valve 188 is cut off, the A port and the T port are in communication with each other, and the hydraulic chamber 174 is in communication with the hydraulic oil tank 184 through the hydraulic oil inlet pipe 196 and the return pipe 198. Therefore, the hydraulic pressure is not applied to the hydraulic chamber 174, and the fuel injection valve 160 is closed by the biasing force of the elastic spring 168.

At this point, the hydraulic oil pressurized by the hydraulic pump 186 passes through the throttle valve 194 and is introduced into the discharge port 178. The discharge port 178 faces the second end 180b of the bypass hole 180 in a state in which the operating piston 172 is held in the standby position shown in FIG. 4, and the hydraulic oil is introduced from the discharge port 178 to the hydraulic chamber 174 through the bypass hole 180.

Additionally, the hydraulic oil introduced into the hydraulic chamber 174 flows to the A port of the switching valve 188 through the oil guide hole 176 and the hydraulic oil inlet pipe 196. The A port of the switching valve 188 is in communication with the T port, and the hydraulic oil circulates to the hydraulic oil tank 184 through the A port, the T port and the return pipe 198.

As described above, while the operating piston 172 is held in the standby position, the hydraulic oil guided from the hydraulic pump 186 to the hydraulic chamber 174 is discharged from the hydraulic chamber 174 through the oil guide hole 176, and thus the hydraulic oil is circulated. Accordingly, the hydraulic oil warmed in the hydraulic oil tank 184 is circulated to minimize a temperature drop of the hydraulic fluid in a circulation route, and thus operation accuracy of the fuel injection valve 160 can be enhanced. Also, since the bypass hole 180 is provided in the operating piston 172, a temperature drop of the operating piston 172 can also be minimized by the circulated hydraulic oil. Further, since the hydraulic oil tank 184 is included in the circulation route of the hydraulic oil, defoaming of bubbles can be enabled by the plate members 184a inside the hydraulic oil tank 184.

Meanwhile, when the switching valve 188 is located at the switching position shown in FIG. 5, the T port of the switching valve 188 is cut off, the P port and the A port are in communication with each other, and the hydraulic chamber 174 is in communication with the hydraulic pump 186 through the hydraulic oil inlet pipe 196 and the first supply pipe 190. Therefore, the hydraulic pressure is applied to the hydraulic chamber 174, and the fuel injection valve 160 is pressed and opened by the hydraulic pressure.

In this way, the switching valve 188 is switched to a first switching position (FIG. 5) in which the hydraulic oil discharged from the hydraulic pump 186 is guided to the hydraulic chamber 174 and a second switching position (FIG. 4) in which the hydraulic oil discharged from the hydraulic pump 186 is guided to the discharge port 178.

When the operating piston 172 moves to an operating position shown in FIG. 5, the discharge port 178 does not face the second end 180b of the bypass hole 180, and the second end 180b of the bypass hole 180 is closed by the inner wall of the small diameter hole 166. As a result, the hydraulic oil pressurized in the hydraulic pump 186 flows to a circulation pipe 192 side, but a flow rate of the hydraulic oil is restricted by the throttle valve 194, and thus an operation of the operating piston 172 is not affected.

Further, since a passage cross section of the bypass hole 180 is sufficiently small with respect to the pressure receiving surface of the operating piston 172, a discharge amount of the hydraulic oil discharged from the hydraulic chamber 174 through the bypass hole 180 and the discharge port 178 is minimized when the fuel injection valve 160 is switched from the closed state to the open state. Accordingly, it is possible to suppress deterioration in responsiveness when the fuel injection valve 160 is opened.

In the above-described embodiment, while the operating piston 172 is maintained in the standby position, the bypass hole 180 guides the hydraulic oil discharged from the hydraulic pump 186 to the hydraulic chamber 174. However, while the operating piston 172 is maintained in the standby position, the bypass hole 180 may discharge the hydraulic oil discharged from the hydraulic pump 186 from the hydraulic chamber 174. In this case, for example, the hydraulic pump 186 may be constituted in a variable capacity type to lower a discharge pressure and may control the hydraulic pressure in the hydraulic chamber 174 not to be the above-described threshold value or more. In either case, when the hydraulic oil flows through the bypass hole 180, the temperature drop of the hydraulic oil can be minimized, and thus the operation accuracy of the fuel injection valve 160 can be enhanced.

Also, in the above-described embodiment, the discharge port 178 is provided at the casing 146, and the discharge port 178 faces the second end 180b of the bypass hole 180 while the operating piston 172 is held in the standby position and does not face the second end 180b of the bypass hole 180 when the operating piston 172 moves to the operating position. Additionally, while the operating piston 172 is held in the standby position, the hydraulic chamber 174 and the discharge port 178 are in communication with each other, and the hydraulic oil flows through the bypass hole 180, and when the operating piston 172 moves to the operating position, the communication between the hydraulic chamber 174 and the discharge port 178 is cut off. However, the discharge port 178 is not indispensable, and it may not be a constitution in which the communication state between the hydraulic chamber 174 and the discharge port 178 is changed depending on whether or not the discharge port 178 and the bypass hole 180 face each other. However, by setting the discharge port 178 and the bypass hole 180 in the above-described positional relationship, the second end 180b of the bypass hole 180 is closed when the operating piston 172 moves from the standby position toward the operating position, and the deterioration of the responsiveness when the fuel injection valve 160 is opened can be suppressed. Further, in the above-described embodiment, when the operating piston 172 moves slightly from the standby position toward the operating position, the second end 180b of the bypass hole 180 is closed before the operating piston 172 reaches the operating position, and thus the deterioration of the responsiveness when the fuel injection valve 160 is opened can be further suppressed.

Also, in the above-described embodiment, the switching valve 188 which is switched to the first switching position and the second switching position is provided. However, as described above, as long as the hydraulic pump 186 is constituted in the variable capacity type to lower the discharge pressure and controls the hydraulic pressure in the hydraulic chamber 174 not to be the above-described threshold value or more, the switching valve 188 is not indispensable. However, even if the hydraulic pump 186 is not constituted in the variable capacity type and is operated at a predetermined output, the opening and closing of the fuel injection valve 160 can be switched by providing the switching valve 188.

Also, in the above-described embodiment, the temperature drop of the hydraulic oil is minimized by circulating the hydraulic oil to the hydraulic oil tank 184 and heating the hydraulic oil. However, for example, a cooler for cooling the hydraulic oil in the hydraulic oil tank 184 may be provided, and the hydraulic oil may be circulated to the hydraulic oil tank 184 to be cooled, and thus a temperature rise of the hydraulic oil may be minimized.

Also, in the above-described embodiment, the fuel injection device 128 is provided at the fuel supply passage 144 which communicates from the fuel gas main pipe 140 to the fuel injection port 126. However, the fuel injection device 128 may perform a fuel oil injection process by opening and closing, for example, the pilot injection valve 142. In this case, the fuel injection valve 160 is the pilot injection valve 142. That is, the fuel injected by the fuel injection device 128 may be a fuel gas or a liquid fuel.

While preferred embodiments of the present disclosure have been described above with reference to the accompanying drawings, the present disclosure is not limited to those examples. It is apparent that those who have ordinary skills in the art can make various changes or modifications within the scope of the technical spirit claimed herein, and it should be understood that those changes or modifications are within the technical scope of the present disclosure.

### [Industrial Applicability]

The present disclosure can be applied to a hydraulically driven fuel injection device having an operating piston operated by a hydraulic pressure, and an engine.

### [Reference Signs List]

100 Uniflow scavenging two-cycle engine (engine)
128 Fuel injection device
146 Casing
160 Fuel injection valve
172 Operating piston
172b Second end (pressure receiving surface)
172c Sliding surface (surface different from pressure receiving surface)
174 Hydraulic chamber
178 Discharge port
180 Bypass hole
180a First end
180b Second end
186 Hydraulic pump
188 Switching valve

## Claims

1. A fuel injection device (128) having a fuel injection valve (160) which is changed between a closed state in which supply of a fuel is stopped and an open state in which the fuel is supplied, comprising:
a hydraulic pump (186) configured to discharge a hydraulic oil,
a casing (146) in which a hydraulic chamber (174) connected to the hydraulic pump (186) is provided,
an operating piston (172) slidably provided inside the casing (146) such that, when a pressure in the hydraulic chamber (174) is less than a preset threshold value, the operating piston (172) is held in a standby position in which the fuel injection valve (160) is maintained in the closed state, and when the pressure in the hydraulic chamber (174) is more than or equal to the threshold value, the operating piston (172) moves to an operating position in which the fuel injection valve (160) is set to the open state, and
a bypass hole (180) formed in the operating piston (172) and configured to guide the hydraulic oil discharged from the hydraulic pump (186) into the hydraulic chamber (174), while the operating piston (172) is held in the standby position, and
wherein the operating piston (172) has a pressure receiving surface (172b) which faces the hydraulic chamber (174), a first end (180a) of the bypass hole (180) is opened to the pressure receiving surface (172b),
**characterized in that**
a second end (180b) of the bypass hole (180) is opened to a sliding surface (172c).

2. The fuel injection device (128) according to claim 1, wherein
a discharge port (178) which faces the second end (180b) of the bypass hole (180) while the operating piston (172) is held in the standby position and does not face the second end (180b) of the bypass hole (180) when the operating piston (172) moves to the operating position is provided at the casing (146), the hydraulic chamber (174) and the discharge port (178) are in communication with each other while the operating piston (172) is held in the standby position, and the communication between the hydraulic chamber (174) and the discharge port (178) is cut off when the operating piston (172) moves to the operating position.

3. The fuel injection device (128) according to claim 2, comprising a switching valve (188) which is switched to a first switching position in which the hydraulic oil discharged from the hydraulic pump (186) is guided to the hydraulic chamber (174) and a second switching position in which the hydraulic oil discharged from the hydraulic pump (186) is guided to the discharge port (178).

4. An engine (100) having the fuel injection device (128) according to any one of claims 1 to 3.

## Patentansprüche

1. Kraftstoffeinspritzvorrichtung (128) mit einem Kraftstoffeinspritzventil (160), das zwischen einem geschlossenen Zustand, in dem die Zufuhr eines Kraftstoffs gestoppt ist, und einem offenen Zustand, in dem der Kraftstoff zugeführt wird, geändert wird, mit:
einer Hydraulikpumpe (186), die konfiguriert ist, ein Hydrauliköl abzugeben,
einem Gehäuse (146), in dem eine mit der Hydraulikpumpe (186) verbundene Hydraulikkammer (174) vorgesehen ist,
einem Betätigungskolben (172), der gleitend innerhalb des Gehäuses (146) derart vorgesehen ist, dass, wenn ein Druck in der Hydraulikkammer (174) kleiner als ein voreingestellter Schwellenwert ist, der Betätigungskolben (172) in einer Bereitschaftsposition gehalten wird, in der das Kraftstoffeinspritzventil (160) im geschlossenen Zustand gehalten wird, und, wenn der Druck in der Hydraulikkammer (174) größer oder gleich dem Schwellenwert ist, der Betätigungskolben (172) sich in eine Betriebsposition bewegt, in der das Kraftstoffeinspritzventil (160) in den offenen Zustand gesetzt ist, und
einer Umgehungsbohrung (180), die in dem Betätigungskolben (172) ausgebildet und so konfiguriert ist, dass sie das von der Hydraulikpumpe (186) abgegebene Hydrauliköl in die Hydraulikkammer (174) leitet, während der Betätigungskolben (172) in der Bereitschaftsstellung gehalten wird, und
wobei der Betätigungskolben (172) eine Druckaufnahmefläche (172b) aufweist, die der Hydraulikkammer (174) zugewandt ist, ein erstes Ende (180a) der Umgehungsbohrung (180) zur Druckaufnahmefläche (172b) hin geöffnet ist, **dadurch gekennzeichnet, dass**
ein zweites Ende (180b) der Umgehungsbohrung (180) zu einer Gleitfläche (172c) hin geöffnet ist.

2. Kraftstoffeinspritzvorrichtung (128) nach Anspruch 1, wobei
eine Auslassöffnung (178), die dem zweiten Ende (180b) der Umgehungsbohrung (180) zugewandt ist, während der Betätigungskolben (172) in der Bereitschaftsstellung gehalten wird, und nicht dem zweiten Ende (180b) der Umgehungsbohrung (180) zugewandt ist, wenn sich der Betätigungskolben (172) in die Betriebsstellung bewegt, in dem Gehäuse (146) vorgesehen ist, wobei die Hydraulikkammer (174) und die Auslassöffnung (178) miteinander in Verbindung stehen, während der Betätigungskolben (172) in der Bereitschaftsstellung gehalten ist, und die Verbindung zwischen der Hydraulikkammer (174) und der Auslassöffnung (178) unterbrochen wird, wenn sich der Arbeitskolben (172) in die Betriebsstellung bewegt.

3. Kraftstoffeinspritzvorrichtung (128) nach Anspruch 2, mit einem Schaltventil (188), das in eine erste Schaltstellung, in der das von der Hydraulikpumpe (186) abgegebene Hydrauliköl zur Hydraulikkammer (174) geführt wird, und in eine zweite Schaltstellung geschaltet wird, in der das von der Hydraulikpumpe (186) abgegebene Hydrauliköl zur Auslassöffnung (178) geführt wird.

4. Motor (100) mit der Kraftstoffeinspritzvorrichtung (128) nach einem der Ansprüche 1 bis 3.

## Revendications

1. Dispositif d'injection de carburant (128) ayant une soupape d'injection de carburant (160) qui est modifiée entre un état fermé dans lequel l'alimentation d'un carburant est arrêté et un état ouvert dans lequel le carburant est alimenté, comprenant :
une pompe hydraulique (186) configurée pour décharger une huile hydraulique,
un carter (146) dans lequel une chambre hydraulique (174) raccordée à la pompe hydraulique (186) est prévue,
un piston d'actionnement (172) prévu, de manière coulissante, à l'intérieur du carter (146), de sorte que, lorsqu'une pression dans la chambre hydraulique (174) est inférieure à une valeur de seuil prédéterminée, le piston d'actionnement (172) est maintenu dans une position d'attente dans laquelle la soupape d'injection de carburant (160) est maintenue à l'état fermé, et lorsque la pression dans la chambre hydraulique (174) est supérieure ou égale à la valeur de seuil, le piston d'actionnement (172) passe dans une position opérationnelle dans laquelle la soupape d'injection de carburant (160) est placée à l'état ouvert, et
un trou de dérivation (180) formé dans le piston d'actionnement (172) et configuré pour guider l'huile hydraulique déchargée de la pompe hydraulique (186) dans la chambre hydraulique (174), alors que le piston d'actionnement (172) est maintenu dans la position d'attente, et
dans lequel le piston d'actionnement (172) a une surface de réception de pression (172b) qui fait face à la chambre hydraulique (174), une première extrémité (180a) du trou de dérivation (180) est ouverte sur la surface de réception de pression (172b), **caractérisé en ce que** :
une seconde extrémité (180b) du trou de dérivation (180) est ouverte sur une surface de coulissement (172c).

2. Dispositif d'injection de carburant (128) selon la revendication 1, dans lequel :
un orifice de décharge (178) qui fait face à la seconde extrémité (180b) du trou de dérivation (180), alors que le piston d'actionnement (172) est maintenu dans la position d'attente et ne fait pas face à la seconde extrémité (180b) du trou de dérivation (180) lorsque le piston d'actionnement (172) passe dans la position opérationnelle, est prévu au niveau du carter (146), la chambre hydraulique (174) et l'orifice de décharge (178) sont en communication entre eux alors que le piston d'actionnement (172) est maintenu dans la position d'attente, et la communication entre la chambre hydraulique (174) et l'orifice de décharge (178) est coupée lorsque le piston d'actionnement (172) passe dans la position opérationnelle.

3. Dispositif d'injection de carburant (128) selon la revendication 2, comprenant une soupape de commutation (188) qui est commutée dans une première position de commutation dans laquelle l'huile hydraulique déchargée par la pompe hydraulique (186) est guidée vers la chambre hydraulique (174) et une seconde position de commutation dans laquelle l'huile hydraulique déchargée par la pompe hydraulique (186) est guidée vers l'orifice de décharge (178).

4. Moteur (100) ayant un dispositif d'injection de carburant (128) selon l'une quelconque des revendications 1 à 3.
